Europäisches Patentamt

European Patent Office

Office européen des brevets

(19)

(11) Veröffentlichungsnummer: **0 073 896**

**A2**

(12) ## EUROPÄISCHE PATENTANMELDUNG

(21) Anmeldenummer: 82106065.4

(22) Anmeldetag: 07.07.82

(51) Int. Cl.³: **B 23 K 35/30**

(30) Priorität: 09.09.81 DE 3135622

(43) Veröffentlichungstag der Anmeldung:
16.03.83 Patentblatt 83/11

(84) Benannte Vertragsstaaten:
CH FR GB IT LI NL SE

(71) Anmelder: MESSER GRIESHEIM GMBH
Patentabteilung Hanauer Landstrasse 330
D-6000 Frankfurt/Main 1(DE)

(72) Erfinder: Spahn, Claus, Dr.
Rückertstrasse 29
D-6052 Mühlheim(DE)

(72) Erfinder: Itzenhäuser, Dr.
Kornblumenweg 24
D-6239 Langenhain(DE)

(72) Erfinder: Herrnkind, Dr.
Pommernstrasse 16
D-6231 Schwalbach(DE)

(54) **Verfahren zum Schweissen von Werkstücken aus ferritischaustenitischem Stahl.**

(57) Bei diesem Verfahren wird beim Schweißen von Werkstücken aus einem Stahl, der folgende Zusammensetzung hat:

| | | |
|---|---|---|
| 23,0 | – | 30,0 % Chrom |
| 4,0 | – | 7,0 % Nickel |
| 1,0 | – | 5,0 % Molybdän |
| 1,0 | – | 4,0 % Kupfer |
| 0,2 | – | 2,0 % Silizium |
| 0,2 | – | 4,0 % Mangan |
| 0,01 | – | 0,1 % Kohlenstoff |
| 0,06 | – | 0,4 % Stickstoff |

Rest Eisen mit unvermeidbaren Verunreinigungen, im gewünschten Schweißbereich ein Schweiß-Zusatzwerkstoff abgeschmolzen.

Zwecks Erreichung ausreichender Gütewerte weist der Schweiß-Zusatzwerkstoff eine Zusammensetzung auf, die ein abgeschmolzenes Schweißgut folgender Zusammensetzung ergibt:

| | | |
|---|---|---|
| 22,0 | – | 26,0 % Chrom |
| 7,0 | – | 14,0 % Nickel |
| 2,0 | – | 4,0 % Molybdän |
| 1,0 | – | 4,0 % Kupfer |
| kleiner | – | 2,0 % Silizium |
| kleiner | – | 2,0 % Mangan |
| kleiner | – | 0,03 % Kohlenstoff |
| 0,1 | – | 0,3 % Stickstoff |

Rest Eisen mit unvermeidbaren Verunreinigungen.

EP 0 073 896 A2

– 1 –

MESSER GRIESHEIM GMBH                    MG 1280

Kennwort:  GRINOX 63                      EM

Erfinder:  Dr.Herrnkind                   Ordner: IX
           Dr.Spahn
           Dr.Itzenhäuser


Verfahren zum Schweißen von Werkstücken aus ferritischaustenitischem Stahl

Die vorliegende Erfindung betrifft ein Verfahren zum
Schweißen von Werkstücken aus ferritisch-austenitischem
Stahl, der folgende Zusammensetzung hat:

23,0  – 30,0 % Chrom
4,0   –  7,0 % Nickel
1,0   –  5,0 % Molybdän
1,0   –  4,0 % Kupfer
0,2   –  2,0 % Silizium
0,2   –  4,0 % Mangan
0,01  –  0,1 % Kohlenstoff
0,06  –  0,4 % Stickstoff

Rest Eisen mit unvermeidbaren Verunreinigungen,

wobei beim Schweißen ein Schweiß-Zusatzwerkstoff im gewünschten Schweißbereich abgeschmolzen wird. Mit diesem Oberbegriff wird auf einen austenitisch-ferritischen Stahl Bezug genommen, wie er beispielsweise durch die DE-AS 1 608 236 bekannt geworden ist. Es ist ferner bekannt, aus diesem Stahl Schweißelektroden und Schweißdraht herzustellen und vorgeschlagen worden, mit diesen artgleichen Zusatzwerkstoffen Werkstücke, die aus dem bekannten austenitisch -ferritischen Stahl bestehen, zusammenzuschweißen. Die Praxis hat jedoch gezeigt, daß die dabei erreichten Schweißverbindungen keine ausreichenden Zähigkeitswerte, Kerbschlagzähigkeit und Bruchdehnung aufweisen, um eine sprödbruchsichere Schweißverbindung zu schaffen. Ferner ist die Korrosionsbeständigkeit der erzielten Schweißnaht geringer als die des Grundwerkstoffes der Werkstücke.

Ausgehend von diesen Ergebnissen ist es Aufgabe der vorliegenden Erfindung, ein Verfahren zum Zusammenschweißen von Werkstücken aus dem eingangs genannten Stahl zu schaffen, mit dem eine Schweißverbindung erreichbar ist, die die erforderlichen Gütewerte, insbesondere in bezug auf Kerbschlagzähigkeit und Dehnung sowie Korrosionsbeständigkeit aufweist und damit insgesamt gegenüber den verschiedensten Beanspruchungen besonders widerstandsfähig ist.

Zur Lösung dieser Aufgabe wird erfindungsgemäß vorgeschlagen, daß der Schweiß-Zusatzwerkstoff eine Zusammensetzung aufweist, die ein abgeschmolzenes Schweißgut folgender Zusammensetzung ergibt:

```
              22,0  -  26,0 % Chrom
   größer      7,0  -  14,0 % Nickel
              2,0  -   4,0 % Molybdän
              1,0  -   4,0 % Kupfer
   kleiner    2,0 % Silizium
   kleiner    2,0 % Mangan
   kleiner    0,03% Kohlenstoff
              0,1  -   0,3 % Stickstoff
```

Rest Eisen mit unvermeidbaren
Verunreinigungen

Besonders vorteilhaft hat sich ein Schweiß-Zusatzwerkstoff erwiesen, der ein abgeschmolzenes Schweißgut
folgender Zusammensetzung ergibt:

```
   24,5  %   Chrom
    8,0  %   Nickel
    2,8  %   Molybdän
    2,8  %   Kupfer
    1,0  %   Silizium
    0,9  %   Mangan
    0,02 %   Kohlenstoff
    0,15 %   Stickstoff
```

Rest Eisen mit unvermeidbaren Verunreinigungen

- 4 -

Dabei sind folgende Gütewerte erreicht worden:

| | | | |
|---|---|---|---|
| 0,2 | - | Dehngrenze | 769 N/mm² |
| 0,1 | - | Dehngrenze | 830 N/mm² |
| | | Zugfestigkeit | 911 N/mm² |

Bruchdehnung bei Meßlänge
L = 5 x Anfangsprobendurchmesser $d_o$  17,6%
Einschnürung                28  %
Kerbschlagarbeit
(ISO-V bei + 20 °C)                31 Joule

Zur Erreichung des abgeschmolzenen Schweißgutes mit der erfindungsgemäßen Zusammensetzung wird beim Schweißen mit Schweißstäben (WIG-Schweißen) bzw. Drahtelektrode (MSG-Schweißverfahren) bevorzugt für Schweißstab/Drahtelektrode folgende Zusammensetzung vorgeschlagen:

| | | | |
|---|---|---|---|
| 22,0 | - | 26,0 % | Chrom |
| 7,0 | - | 14,0 % | Nickel |
| 2,0 | - | 4,0 % | Molybdän |
| 1,0 | - | 4,0 % | Kupfer |
| kleiner | | 2,0 % | Silizium |
| kleiner | | 2,0 % | Mangan |
| kleiner | | 0,03% | Kohlenstoff |
| 0,1 | - | 0,3 % | Stickstoff |

Rest Eisen mit unvermeidbaren
Verunreinigungen.

Zum Elektrodenhandschweißen wird bevorzugt eine Elektrode vorgeschlagen, bei der der Kerndraht folgende Zusammensetzung aufweist:

18,0 - 26,0   vorzugsweise  21,0 - 23,0  %  Chrom
 4,0 - 11,0   "               4,5 -  6,5  %  Nickel
 0   -  4,0   "               2,5 -  3,5  %  Molybdän
 0   -  4,0%  Kupfer
kleiner 2,0  vorzugsweise kleiner  1,0  %  Silizium
  "    -  2,0%  Mangan
  "    -  0,03%Kohlenstoff
 0   -  0,30  vorzugseise   0,08 - 0,20  %  Stickstoff

Rest Eisen mit unvermeidbaren Verunreinigungen

und die Umhüllung folgende Zusammensetzung hat:

| | | | |
|---|---|---|---|
| Silikate | 5 - 50 | vorzugsweise | 21 - 25 % |
| Karbonate | 5 - 50 | " | 6 - 9 % |
| Fluorit | 5 - 50 | " | 2 - 4 % |
| Titanate u. Titandioxid | 5 - 50 | " | 32 - 36 % |
| Metalle, insbesondere Chrom, Nickel, Molybdän, Kupfer, Mangan | 5 - 50 | " | 29 - 34 % |
| Sonstiges, insbesondere Preßhilfs- und Bindemittel | 0 - 10 | " | 0 - 2 % |

so daß Schweißgut mit folgender Zusammensetzung niedergeschmolzen wird:

| 22,0 - 26,0 | vorzugsweise | 24,5 | % | Chrom |
|---|---|---|---|---|
| 7,0 - 14,0 | " | 8,0 | % | Nickel |
| 2,0 - 4,0 | " | 2,8 | % | Molybdän |
| 1,0 - 4,0 | " | 2,8 | % | Kupfer |
| kleiner 2,0 | " | 1,0 | % | Silizium |
| " 2,0 | " | 0,9 | % | Mangan |
| " 0,03 | " | 0,025% | | Kohlenstoff |
| 0,1 - 0,3 | " | 0,15 | % | Stickstoff |

Rest Eisen mit unvermeidbaren Verunreinigungen.

Das erfindungsgemäße Verfahren ist bevorzugt beim Verbindungsschweißen von Werkstücken aus ferritischaustenitischem Stahl mit Vorteil einsetzbar. Es ist
selbstverständlich aber auch vorteilhaft möglich, das
beschriebene Verfahren bzw. den Zusatzwerkstoff bei allen
anderen Schweißverfahren einzusetzen und somit auch beim
Auftragsschweißen, Plattieren, Panzern sowie beim Verbindungsschweißen eines Werkstückes aus ferritischaustenitischem Stahl mit einem Werkstück aus unlegiertem
bzw. hochlegierten Stahl zu verwenden.

Ferner ist beim UP-Schweißen das Verfahren und der Zusatzwerkstoff einsetzbar, wobei dann die abschmelzende
Drahtelektrode entsprechend der Drahtelektrode bei MSG-
Schweißen aufgebaut ist und ein dazugehöriges übliches
UP-Pulver zum Einsatz kommt. Eine andere Variante beim
UP-Schweißen kann darin bestehen, als Drahtelektrode einen
Kerndraht wie bei der Stabelektrode zu verwenden und das
UP-Pulver mit entsprechenden Legierungselementen zu versehen.

Be/Hi

Ffm., 07.09.1981

Patentansprüche

1. Verfahren zum Schweißen von Werkstücken auf ferritschaustenitischen Stahl, der folgende Zusammensetzung hat:

|          |   |          |            |
|----------|---|----------|------------|
| 23,0     | - | 30,0 %   | Chrom      |
| 4,0      | - | 7,0 %    | Nickel     |
| 1,0      | - | 5,0 %    | Molybdän   |
| 1,0      | - | 4,0 %    | Kupfer     |
| 0,2      | - | 2,0 %    | Silizium   |
| 0,2      | - | 4,0 %    | Mangan     |
| 0,01     | - | 0,1 %    | Kohlenstoff|
| 0,06     | - | 0,4 %    | Stickstoff |

Rest Eisen mit unvermeidbaren Verunreinigungen,

wobei beim Schweißen ein Schweißzusatzwerkstoff im gewünschten Schweißbereich abgeschmolzen wird, dadurch gekennzeichnet, daß der Schweiß-Zusatzwerkstoff eine Zusammensetzung aufweist, die ein abgeschmolzenes Schweißgut folgender Zusammensetzung ergibt:

|         |          |   |          |            |
|---------|----------|---|----------|------------|
|         | 22,0     | - | 26,0 %   | Chrom      |
| größer  | 7,0      | - | 14,0 %   | Nickel     |
|         | 2,0      | - | 4,0 %    | Molybdän   |
|         | 1,0      | - | 4,0 %    | Kupfer     |
| kleiner | 2,0 %    |   |          | Silizium   |
| kleiner | 2,0 %    |   |          | Mangan     |
| maximal | 0,03%    |   |          | Kohlenstoff|
|         | 0,1      | - | 0,3 %    | Stickstoff |

Rest Eisen mit unvermeidbaren Verunreinigungen.

2. Verfahren nach Anspruch 1,
dadurch gekennzeichnet, daß der Schweißzusatzwerkstoff eine Zusammensetzung aufweist, die ein abgeschmolzenes Schweißgut folgender Zusammensetzung ergibt:

|        |            |
|--------|------------|
| 24,5 % | Chrom      |
| 8,0 %  | Nickel     |
| 2,8 %  | Molybdän   |
| 2,8 %  | Kupfer     |
| 1,0 %  | Silizium   |
| 0,9 %  | Mangan     |
| 0,025% | Kohlenstoff |
| 0,15 % | Stickstoff |

Rest Eisen mit unvermeidbaren Verunreinigungen.

3. Schweiß-Zusatzwerkstoff zur Durchführung des Verfahrens nach Anspruch 1 oder 2, wobei der Zusatzwerkstoff als Schweißstab oder Drahtelektrode ausgebildet ist,
dadurch gekennzeichnet, daß Schweißstab bzw. Drahtelektrode folgende Zusammensetzung aufweist:

|              |              |
|--------------|--------------|
| 22,0 - 26,0 %| Chrom        |
| 7,0 - 14,0 % | Nickel       |
| 2,0 - 4,0 %  | Molybdän     |
| 1,0 - 4,0 %  | Kupfer       |
| kleiner - 2,0 % | Silizium  |
| kleiner - 2,0 % | Mangan    |
| kleiner - 0,03 % | Kohlenstoff |
| 0,1 - 0,3 %  | Stickstoff   |

Rest Eisen mit unvermeidbaren Verunreinigungen

4. Schweiß-Zusatzwerkstoff zur Durchführung des Verfahrens nach Anspruch 1 oder 2, wobei der Zusatzwerkstoff als umhüllte Stabelektrode ausgebildet ist,

dadurch gekennzeichnet, daß der Kerndraht der Elektrode folgende Zusammensetzung aufweist:

| | | | | |
|---|---|---|---|---|
| 18,0 - 26,0 | vorzugsweise | 21,0 - 23,0 | % | Chrom |
| 4,0 - 11,0 | " | 4,5 - 6,5 | % | Nickel |
| 0 - 4,0 | " | 2,5 - 3,5 | % | Molybdän |
| 0 - 4,0% | Kupfer | | | |
| kleiner 2,0 | vorzugsweise kleiner | 1,0 | % | Silizium |
| " - 2,0% | Mangan | | | |
| " - 0,03% | Kohlenstoff | | | |
| 0 - 0,30 | vorzugseise | 0,08 - 0,20 | % | Stickstoff |

Rest Eisen mit unvermeidbaren Verunreinigungen

und die Umhüllung folgende Zusammensetzung hat:

| | | | | |
|---|---|---|---|---|
| Silikate | 5 - 50 | vorzugsweise | 21 - 25 | % |
| Karbonate | 5 - 50 | " | 6 - 9 | % |
| Fluorit | 5 - 50 | " | 2 - 4 | % |
| Titanate u. Titandioxid | 5 - 50 | " | 32 - 36 | % |
| Metalle | 5 - 50 | " | 29 - 34 | % |
| Sonstige | 0 - 10 | " | 0 - 2 | % |

so daß sich ein Schweißgut mit folgender Zusammensetzung ergibt:

| 22,0 - 26,0 | vorzugsweise | 24,5 % | Chrom |
|---|---|---|---|
| 7,0 - 14,0 | " | 8,0 % | Nickel |
| 2,0 - 4,0 | " | 2,8 % | Molybdän |
| 1,0 - 4,0 | " | 2,8 % | Kupfer |
| kleiner- 2,0 | " | 1,0 % | Silizium |
| kleiner- 2,0 | " | 0,9 % | Mangan |
| kleiner- 0,03 | " | 0,025% | Kohlenstoff |
| 0,1 - 0,3 | " | 0,15% | Stickstoff. |

MG 1280

Be/Hi

Ffm., 07.09.1981